# EUROPEAN PATENT SPECIFICATION

(11) **EP 0 715 792 B1**
(45) Date of publication and mention of the grant of the patent: **03.05.2000**
(21) Application number: 94924321.6
(22) Date of filing: 18.08.1994
(51) Int. Cl.: H04M 3/44, H04Q 7/38, H04Q 7/32, H04M 1/274

(54) **METHOD FOR ESTABLISHING A CONNECTION**
VERFAHREN ZUR AUFBAUEN EINER VERBINDUNG
PROCEDE POUR ETABLIR UNE CONNEXION

(30) Priority: 26.08.1993 FI 933744; 15.06.1994 FI 942842
(43) Date of publication of application: 12.06.1996
(73) Proprietor: Sonera Oyj, 00510 Helsinki (FI)
(72) Inventor: LEPPÄNEN, Osmo, FIN-15240 Lahti (FI)
(74) Representative: Simmelvuo, Markku Kalevi
(86) International application number: PCT/FI94/00359
(87) International publication number: WO 95/06381

(56) References cited:
- EP-A- 0 284 324
- WO-A-92/03007
- PATENT ABSTRACTS OF JAPAN, Vol. 5, No. 44, E-50; & JP,A,56 000 757 (NIPPON DENSHIN DENWA KOSHA), 7 January 1981 (07.01.81).

## Description

The object of the invention is a method for accomplishing a connection profitably from a mobile communication network A-subscriber connection.

It has been possible to form a group of subscribers for example inside a company using PABX (private automatic branch exchange) extension numbers, which has made possible to make internal calls inside a group using PABX extension numbers. When a subscriber in the PABX group has made a call using an extension in the group, the extension number and the caller number are transferred in the call initiating message through the base station to the mobile telephone exchange, where from a subscriber register connected to the exchange using the information received in the message mentioned before it is checked if the subscriber has the right to use the extension number, after which the number is transformed to a PSTN (public switched telephone network) subscriber number using a number transformation table. About this call the exchange gives a separate announcement to billing information, so the call can be billed in a special way. This kind of system is described in document EP 0 462 727 A2. The problem of implementations like this is, that they are restricted to a specific PABX group or to a specific base station area.

Using the method described in the invention a crucial improvement is achieved concerning the problems mentioned above. The invention provides a method according to the features of claim 1.

Mobile station subscribers call repeatedly to a few same numbers, which may be a certain client, home, an institution or similar. To make these calls even more interestingly, the operator can give to the mobile phone subscriber abbreviated numbers, using which often to the same subscriber made repeated calls could be billed differently, for example more profitably than calls, which are made using normal subscriber numbers.

In the method of the invention the mobile phone subscriber's calls can be grouped in billing using starting numbers.

The object of the invention is a method for accomplishing a connection from a mobile communication network A-subscriber connection to a mobile communication network or other telecommunication network B-subscriber connection for making a call with a mobile station, which mobile communication system includes mobile stations and mobile communication network, which has at least one base station with limited coverage area, to which the mobile stations have a connection to, and at least one mobile phone exchange to switch the connections in the mobile communication network and from it to other communication networks and vice versa. Connection from a mobile station is made to mobile phone exchange by dialling with the mobile station of the A-subscription a predetermined number, which includes a prefix number common to all A-subscribers and a A-subscriber dependent selected short number, which is beforehand stored to a A-subscriber dependent short number table in the mobile phone exchange; that in the mobile phone exchange the dialling of the A-subscriber is analysed, when using A-subscriber recognition, like A-subscriber identity, the A-subscriber's right to short number service is recognized; that the short number is transformed using A-subscriber dependent short number table to a normal mobile network or other telecommunication network number; and that the connection from the mobile phone exchange to B-subscriber is made using the number which corresponds the above mentioned short number, and this number is a public telecommunication network number.

Subscribers can be for example either NMT (Nordic Mobile Telephone) or GSM (Global System for Mobile Communications) subscribers. Short number tables are formed from the short numbers which are used. Short numbers can be for example numbers starting with 701 ... 709, where 70 is a prefix common for all subscribers attached to the service and 1 ... 9 shows the subscriber's possible short numbers.

In the method mentioned above in the mobile phone exchange a billing record is made, in which for the B-number is registered the short number dialled by the A-subscriber. Connection from the mobile phone exchange to the B-subscriber is marked a transferred call, which prevents further call transfer.

In IN(intelligent network) architecture a mobile services switching centre MSC includes or is connected to a intelligent network exchange INC, which includes intercommunicating an upper level control part SCP and a lower level switching part SSP, through which connections are routed to telecommunication network subscriber connections and the control part SCP's service applications are reached, when in the mobile phone exchange MSC billing records are formed using as a B-number identifier the short number and the A-subscriber's dialling is analysed and changed with the mentioned prefix and short number to a modified dialling, which included a service key, and this modified dialling is signalled together with the A-subscriber's identification information to the intelligent network exchange INC, where on basis of A-subscriber's identification information the A-subscriber's right to the service is checked, when either the connection is released and the A-subscriber is given a busy tone, if the A-subscriber does not have a right to the service, the short number table is not found, the value of the short number is greater than the greatest number beforehand stored to the short number table, or using the A-subscriber specific short number table the short number is changed to the mentioned normal mobile communication network or other telecommunication network number and the subscriber's dialling is routed to the B-subscriber connection.

In intelligent network exchange INC after or during the identification of the A-subscriber and verification of the right to the service a redundant billing record is made, and in this record the B-number is the short number dialling of the A-subscriber.

In intelligent network exchange INC after or during the identification of the A-subscriber and verification of the right to the service a redundant billing record is made, and in this record the B-number is the normal mobile communication network or other telecommunication network number which corresponds the short number dialling of the A-subscriber.

For the communication between the mobile services switching centre MSC and the IN-exchange public telecommunication network PSTN, a closed dedicated network, a permanent connection, a direct channel and so on can be used.

The switching part SSP of the IN-exchange INC can be integrated to be a part of the mobile phone exchange and for the communication between the switching part SSP of the IN-exchange INC public telecommunication network PSTN, a closed dedicated network, a permanent connection, a direct channel and so on can be used.

## Claims

1. A method in a telecommunication system comprising
a mobile communication system and
a telecommunication network,
which mobile communication system includes
a group of mobile stations,
a mobile communication network comprising
a base station with limited coverage area for connecting the mobile station to the mobile communication network, and
a mobile phone exchange for switching the connections in the mobile communication network and between the mobile communication network and the telecommunication network,
the method being for establishing a connection from a A-subscriber of the mobile communication network to a B-subscriber of the mobile communication network or the telecommunication network, **characterised** in that the method comprises the steps of
dialling a predetermined number including a prefix number common to all subscribers of the mobile communication network and a A-subscriber dependent selected short number which is beforehand stored to a A-subscriber dependent short number table in the mobile phone exchange,
transmitting the predetermined number and the identity of the A-subscriber from the mobile station of the A-subscriber to the mobile phone exchange,
analyzing the predetermined number in the mobile phone exchange,
recognizing the identity of the A-subscriber,
recognizing A-subscriber's right to a short number service,
transforming the short number to a public telecommunication network number of the mobile communication network or the telecommunication network, and
establishing the connection from the mobile phone exchange to the B-subscriber using the public telecommunication network number which corresponds to the above mentioned short number.

2. A method according to claim 1, characterized in that in the mobile phone exchange a billing record is made, in which for the B-subscriber number is registered the short number dialled by the A-subscriber.

3. A method according to claim 1 and/or claim 2, characterized in that the connection from the mobile phone centre to the B-subscriber is marked a transferred call, which prevents further call transfer.

4. A method according to any claim 1 to 3, characterized in that in the method IN(intelligent network) architecture is used such, that mobile phone centres (MSC) include or are connected to an intelligent network centre (INC), which includes intercommunicating an upper level control part (SCP) and a lower level switching part (SSP), via which connections are routed to telecommunication network subscriber connections and service applications of the control part (SCP) are reached, wherein at the mobile phone centres (MSC) billing records are formed using as a B-subscriber number identifier the short number and the A-subscriber's dialling is analysed and changed by the said prefix and short number to a modified dialling comprising a service key, which is signalled together with the A-subscriber's identification information to the intelligent network centre (INC), where on basis of the A-subscriber's identification information is checked the A-subscriber's right to the service, whereby either the connection is released and the A-subscriber is given a busy tone, if the A-subscriber does not have a right to the service, or if the short number table is not found, or if the value of the short number is greater than the greatest number beforehand stored to the short number table, or, by using the A-subscriber specific short number table, the short number is changed to the said normal number set of the mobile communication network or other telecommunication network and the subscriber's dialling is routed to the B-subscriber connection.

5. A method according to claim 4, characterized in that in the intelligent network centre (INC) after or during the identification of the A-subscriber and verification of the right to a service a redundant billing record is made, wherein as the B-subscriber number is a short number dialling of the A-subscriber.

6. A method according to claim 4, characterized in that in the intelligent network centre (INC) after or during the identification of the A-subscriber and verification of the right to a service a redundant billing record is made, wherein as the B-subscriber number is a normal public telecommunication network number of a mobile communication network or other telecommunication network number corresponding to the short number dialling of the A-subscriber.

7. A method according to any claim 1 to 6, characterized in that for the communication between the mobile phone centre (MSC) and the IN-centre can be used a public telecommunication network (PSTN), a closed dedicated network, a permanent connection, a direct channel or a like.

8. A method according to any claim 1 to 6, characterized in that the switching part (SSP) of the IN-exchange (INC) is integrated to be a part of the mobile phone centre and for the communication between the switching part (SSP) of the IN-exchange (INC) is used a public telecommunication network (PSTN), a closed dedicated network, a permanent connection, a direct channel or a like.

## Patentansprüche

1. Verfahren in einem Telekommunikationssystem, das ein Mobilkommunikationssystem und ein Telekommunikationsnetz umfaßt,
wobei das Mobilkommunikationssystem eine Gruppe von Mobilstationen, ein Mobilkommunikationsnetz, das eine Basisstation mit einem begrenzten Überdeckungbereich zur Verbindung der Mobilstation mit dem Mobilkommunikationsnetz umfaßt, und eine Mobilfernmeldevermittlungsstelle zum Verbindungsaufbau in dem Mobilkommunikationsnetz und zwischen dem Mobilkommunikationsnetz und den Telekommunikationsnetz,
wobei das Verfahren zum Aufbau einer Verbindung von einem A-Teilnehmer des Mobilkommunikationsnetzes zu einem B-Teilnehmer des Mobilkommunikationsnetzes oder des Telekommunikationsnetzes, **dadurch gekennzeichnet** ist, daß das Verfahren die Schritte umfaßt
Wählen einer vorbestimmten Nummer, die eine Vorwahlnummer, die allen Teilnehmern des Mobilkommunikationsnetzes gemeinsam ist, und eine von einem A-Teilnehmer abhängige ausgewählte kurze Nummer umfaßt, die im voraus in einer von einem A-Teilnehmer abhängigen Tabelle für kurze Nummern in der Mobilfernmeldevermittlungsstelle gespeichert ist,
Übertragen der vorbestimmten Nummer und der Kennung des A-Teilnehmers von der Mobilstation des A-Teilnehmers zu der Mobilfernmeldevermittlungsstelle,
Analysieren der vorbestimmten Nummer in der Mobilfernmeldevermittlungsstelle,
Erkennen der Kennung des A-Teilnehmers,
Erkennen des Rechts des A-Teilnehmers auf den Dienst für eine kurze Nummer;
Umsetzen der kurzen Nummer in eine öffentliche Telekommunikationsnetznummer des Mobilkommunikationsnetzes oder des Telekommunikationsnetzes, und
Aufbauen der Verbindung von der Mobilfernmeldevermittlungsstelle zu dem B-Teilnehmer, wobei die öffentliche Telekommunikationsnetznummer verwendet wird, die der obenerwähnten kurzen Nummer entspricht.

2. Verfahren gemäß Anspruch 1, **dadurch gekennzeichnet**, daß in der Mobilfernmeldevermittlungsstelle eine Gebührenaufzeichnung gemacht wird, in der für die B-Teilnehmernumer die von dem A-Teilnehmer gewählte kurze Nummer aufgezeichnet wird.

3. Verfahren gemäß Anspruch 1 und/oder Anspruch 2, **dadurch gekennzeichnet**, daß die Verbindung von der Mobilfernmeldezentrale zu dem B-Teilnehmer als vermittelter Anruf markiert wird, wodurch eine weitere Anrufübertragung verhindert wird.

4. Verfahren gemäß irgendeinem der Ansprüche 1 bis 3, **dadurch gekennzeichnet**, daß bei dem Verfahren eine IN (intelligentes Netz) Architektur verwendet wird derart, daß die Mobilfernmeldezentralen (MSC) eine intelligente Netzzentrale (INC) umfassen oder mit einer verbunden sind, die die Interkommunikation eines Steuerteils (SCP) eines oberen Niveaus und eines Vermittlungsteil (SSP) eines unteren Niveaus umfaßt, und über die Vermittlungen zu Telekommunikationsnetz-Teilnehmerverbindungen gelenkt und Dienstanwendungen des Steuerteils (SCP) erreicht werden, wobei in den Mobilfernmeldevermittlungsstellen (MSC) Gebührenaufzeichnungen gebildet werden und als Nummernkennung des B-Teilnehmers die kurze Nummer verwendet wird, und das Wählen des A-Teilnehmers analysiert und durch die Vorwahl und die kurze Zahl in einen abgeänderten Wählvorgang geändert wird, der einen Dienstschlüssel umfaßt, der zusammen mit der Kennungsinformation des A-Teilnehmers der intelligenten Netzzentrale (INC) mitgeteilt wird, wo auf der Grundlage der Kennungsinformation des A-Teilnehmers das Recht des A-Teilnehmers auf den Dienst geprüft wird, wodurch entweder die Verbindung freigegeben und dem A-Teilnehmer ein Besetztton geliefert wird, wenn der A-Teilnehmer kein Recht auf den Dienst hat, oder, wenn die Tabelle für die kurzen Nummern nicht gefunden wird oder wenn der Wert der kurzen Nummer größer als die größte Nummer ist, die im voraus in der Tabelle für kurze Nummern gespeichert wurde, oder, indem die besondere Tabelle für kurze Nummern des A-Teilnehmers verwendet wird, die kurze Nummer in die normale Nummerngruppe des Mobilkommunikationsnetzes oder eines anderen Telekommunikationsnetzes geändert wird und das Wählen des Teilnehmers zur Vermittlung des B-Teilnehmers gelenkt wird.

5. Verfahren gemäß Anspruch 4, **dadurch gekennzeichnet**, daß in der intelligenten Netzzentrale (INC) nach oder während der Erkennung des A-Teilnehmers und der Verifizierung des Rechts auf einen Dienst eine redundante Gebührenaufzeichnung hergestellt wird, wobei die B-Teilnehmernummer die Kurzwählnummer des A-Teilnehmers ist.

6. Verfahren gemäß Anspruch 4, **dadurch gekennzeichnet**, daß in der intelligenten Netzzentrale (INC) nach oder während der Erkennung des A-Teilnehmers und der Verifizierung des Rechts auf einen Dienst eine redundante Gebührenaufzeichnung hergestellt wird, wobei die B-Teilnehmernummer eine normale öffentlichen Telekommunikationsnetznummer eines Mobilkommunikationsnetzes oder eines anderen Telekommunikationsnetzes ist, die der Kurznummernwahl des A-Teilnehmers entspricht.

7. Verfahren gemäß irgendeinem der Ansprüche 1 bis 6, **dadurch gekennzeichnet**, daß für die Kommunikation zwischen der Mobilfernmeldezentrale (MSC) und der IN-Zentrale ein öffentliches Telekommunikationsnetz (PSTN), ein geschlossenes bestimmtes Netz, eine Standverbindung, ein direkter Kanal oder Ähnliches verwendet werden kann.

8. Verfahren gemäß irgendeinem der Ansprüche 1 bis 6, **dadurch gekennzeichnet**, daß der Vermittlungsteil (SSP) des IN-Amts (INC) als Teil der Mobilfernmeldevermittlungsstelle integriert ist, und daß für die Kommunikation zwischen dem Vermittlungsteil (SSP) des IN-Amts (INC) ein öffentliches Telekommunikationsnetz (PSTN), ein geschlossenes bestimmtes Netz, eine Standverbindung, ein direkter Kanal oder Ähnliches verwendet wird.

## Revendications

1. Procédé dans un système de télécommunications comprenant
un système de radiocommunications mobiles, et
un réseau de télécommunications
ledit système de radiocommunications mobiles comprenant
un groupe de stations mobiles,
un réseau de radiocommunications mobiles comprenant
un centre émetteur-récepteur ayant une zone de couverture limitée destiné à connecter la station mobile au réseau de radiocommunications mobiles, et
un central du service mobile destiné à commuter les connexions dans le réseau de radiocommunications mobiles et entre le réseau de radiocommunications mobiles et le réseau de télécommunications,
le procédé étant destiné à établir une connexion entre un abonné A du réseau de radiocommunications mobiles et un abonné B du réseau de radiocommunications mobiles ou du réseau de télécommunications, caractérisé en ce que le procédé comprend les étapes de
composition d'un numéro prédéterminé incluant un numéro de préfixe commun à tous les abonnés du réseau de radiocommunications mobiles et un numéro abrégé sélectionné en fonction de l'abonné A, qui a été stocké au préalable dans un tableau des numéros abrégés correspondant à l'abonné A dans le central du service mobile,
transmission du numéro prédéterminé et de l'identité de l'abonné A à partir du centre émetteur-récepteur de l'abonné A vers le central du service mobile,
analyse du numéro prédéterminé dans le central du service mobile,
reconnaissance de l'identité de l'abonné A,
reconnaissance du droit de l'abonné A à un service de numéro abrégé,
transformation du numéro abrégé en un numéro du réseau de télécommunications public du réseau de radiocommunications mobiles ou du réseau de télécommunications, et
établissement de la connexion entre le central du service mobile et l'abonné B en utilisant le numéro du réseau de télécommunications public qui correspond au numéro abrégé susmentionné.

2. Procédé selon la revendication 1, caractérisé en ce qu'un enregistrement de facturation est effectué dans le central du service mobile, dans lequel, pour le numéro d'abonné B, le numéro abrégé composé par l'abonné A est enregistré.

3. Procédé selon la revendication 1 et/ou 2, caractérisé en ce que la connexion entre le central du service mobile et l'abonné B est marquée par un appel transféré, qui empêche tout autre transfert d'appel.

4. Procédé selon l'une quelconque des revendications 1 à 3, caractérisé en ce que dans le procédé, l'architecture RI (réseau intelligent) est utilisée de façon à ce que les centraux du service mobile (CSM) incluent ou soient connectés à un central de réseau intelligent (CRI), qui comprend une intercommunication d'une partie de commande de niveau supérieur (SCP) et d'une partie de commutation de niveau inférieur (SSP), par l'intermédiaire de laquelle des connexions sont dirigées vers des connexions d'abonné du réseau de télécommunications et des applications de service de la partie de commande (SCP) sont atteintes, dans lesquelles au niveau des centraux du service mobile (CSM) des enregistrements de facturation sont effectués en utilisant comme identificateur du numéro d'abonné B le numéro abrégé, et la numérotation de l'abonné A est analysée et changée par ledit préfixe et numéro abrégé en une numérotation modifiée comprenant une clé de service, qui est signalée en même temps que les informations d'identification de l'abonné A au central de réseau intelligent (CRI), où sur la base des informations d'identification de l'abonné A, le droit de l'abonné A au service est vérifié, la connexion est coupée et l'abonné A entend une tonalité occupée si l'abonné A n'a pas droit au service, ou si le tableau des numéros abrégés n'est pas trouvé, ou si la valeur du numéro abrégé est supérieure au nombre le plus élevé stocké précédemment dans le tableau des numéros abrégés, ou, en utilisant un tableau des numéros abrégés spécifique à l'abonné A, le numéro abrégé est modifié en ledit ensemble normal de numéros du réseau de radiocommunications mobiles ou autre réseau de télécommunications et la numérotation de l'abonné est dirigée vers la connexion de l'abonné B.

5. Procédé selon la revendication 4, caractérisé en ce que dans le central de réseau intelligent (CRI), après ou pendant l'identification de l'abonné A et la vérification du droit à un service, un enregistrement de facturation redondant est effectué, dans lequel le numéro d'abonné B est une numérotation de numéro abrégé de l'abonné A.

6. Procédé selon la revendication 4, caractérisé en ce que dans le central de réseau intelligent (CRI), après ou pendant l'identification de l'abonné A et la vérification du droit à un service, un enregistrement de facturation redondant est effectué, dans lequel le numéro d'abonné B est un ensemble normal de numéros de réseau de télécommunications public d'un réseau de radiocommunications mobiles ou autre réseau de télécommunications correspondant à la numérotation de numéro abrégé de l'abonné A.

7. Procédé selon l'une quelconque des revendications 1 à 6, caractérisé en ce que pour la communication entre le central du service mobile (CSM) et le central RI, un réseau de télécommunications public (RCP), un réseau dédié fermé, une connexion permanente, une voie directe ou équivalent peuvent être utilisés.

8. Procédé selon l'une quelconque des revendications 1 à 6, caractérisé en ce que la partie commutation (SSP) du central de réseau intelligent (CRI) est intégrée comme faisant partie du central du service mobile et pour la communication entre la partie commutation (SSP) du central de réseau intelligent (CRI), un réseau de télécommunications public (RCP), un réseau dédié fermé, une connexion permanente, une voie directe ou équivalent sont utilisés.
